# EUROPEAN PATENT SPECIFICATION

(11) **EP 1 898 189 B1**
(45) Date of publication and mention of the grant of the patent: **07.11.2012**
(21) Application number: 07253578.4
(22) Date of filing: 10.09.2007
(51) Int. Cl.: G01G 15/00, B67C 3/30

(54) **Method of filling barrel and filling device**
Verfahren zum Füllen eines Fasses und Füllvorrichtung
Procédé de remplissage de baril et dispositif de remplissage

(30) Priority: 11.09.2006 JP 2006245524
(43) Date of publication of application: 12.03.2008
(60) Divisional application: 09000486.2
(73) Proprietor: Suntory Holdings Limited, Kita-ku, Osaka-shi, Osaka 530-8203 (JP)
(72) Inventor: Horikoshi, Takayoshi, Tatebayashi-shi Gunma 374-0073 (JP)
(74) Representative: Stoner, Gerard Patrick

(56) References cited:
- EP-A- 0 089 613
- WO-A-90/15755
- DE-A1- 2 852 694
- US-A- 4 676 282

## Description

### BACKGROUND OF THE INVENTION

### 1. Field of the Invention

The present invention relates to a method of filling a barrel such as a beer barrel with a liquid, for example, beer. The present invention also relates to a filling device for executing the method.

### 2. Description of the Related Art

Generally, beer is sold in bottles or cans. In addition, beer is also sold in glasses or mugs. In such a case beer is filled into beer barrels or tanks, which are exclusively used for beer, in breweries and then delivered to restaurants, etc. In the restaurants, etc., beer is poured into glasses or mugs exclusively through dispensers attached to the beer barrels.

In the case where beer is filled into a beer barrel, the total weight of each beer barrel is measured after the beer has been filled into the beer barrel. When the thus measured total weight is lighter than a predetermined value, the beer barrel is ejected from the production line. Due to the foregoing, it is possible to prevent beer barrels, which are not sufficiently filled with beer, from being delivered to the market.

In the same manner, Japanese Unexamined Patent Publication No. 2006-44665 discloses the following technique. A weight of noodles filled into each cup is measured. In the case where the weight of noodles filled into the cup are lighter than a predetermined value, the cup is ejected from the production line.

In this connection, a beer barrel is a so-called recyclable container into which beer can be refilled in breweries after the beer barrel has been used in a shop. Therefore, the beer barrel is circulated over a relatively long period of time. Further, the beer barrel is made by assembling a relatively large number of parts. Furthermore, there are variations in the weight of each part. Accordingly, compared with bottles or cans, the number of parts of which are relatively small, there are variations in the weight of empty beer barrels. Accordingly, in the case where it is judged whether a beer barrel is sufficiently filled with beer according to the total weight of the beer barrel, the following problems may be encountered.

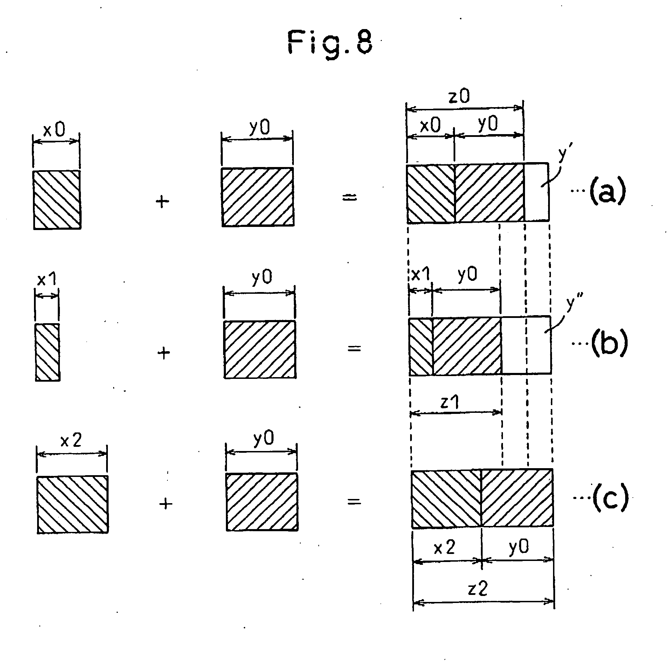

Fig. 8 is a view showing a relationship between the weight x of an empty beer barrel and the beer filling weight y by a formula. As shown by the formula (a) in Fig. 8, when beer, the filling weight of which is y0, is filled into an empty standard beer barrel, the weight of which is x0, the total weight z0 of the beer barrel after the filling can be expressed by "x0 + y0".

On the other hand, as shown by the formula (b) in Fig. 8, in the case where beer, the filling weight of which is y0, is filled into a beer barrel (the weight of which is the minimum value x1) which is lighter than the standard weight x0, the after-filling weight z1 (= x1 + y0) of the beer barrel is lighter than the total after-filling weight z0 (= x0 + y0). In the same manner, as shown by the formula (c) in Fig. 8, in the case where beer, the filling weight of which is y0, is filled into an empty beer barrel (the weight of which is the maximum value x2) which is heavier than the standard weight x0, the weight z2 (= x2 + y0) of the beer barrel after filling is heavier than the total filling weight z0 (= x0 + y0).

In this case, consideration is given to what value should be employed as a predetermined value for judging whether the beer has been sufficiently filled into the beer barrel in the case where beer, the filling weight of which is y0, is filled into a beer barrel and sold. In the case where the weight of all beer barrels are a constant of x0 which is a standard value, "x0 + y0" is decided to be the predetermined value. In this case, only beer barrels, the after-filling weight of which exceed this predetermined value, are delivered, there is no possibility that beer barrels, which are not sufficiently filled with beer, are delivered to the market.

However, as described before, there are relatively wide variations in the weight of beer barrels. Therefore, when beer is filled into a heavy empty beer barrel (for example, the weight of which is the maximum value x2), even it the weight of the filling beer weight is lighter than "y0", the beer barrel's after-filling weight of may exceed the predetermined value "x0 + y0". In this case, the beer barrel, into which beer is not sufficiently filled, may be delivered to the market.

Accordingly, in order to positively prevent the occurrence of a case in which beer barrels, into which beer is not sufficiently filled, are delivered to the market, the after-filling weight z2 (= x2 + y0) of the beer barrel needs to be employed as a predetermined value for judging the insufficiency of filling beer.

However, in the case where the total after-filling weight z2 is employed as the predetermined value for judging the insufficiency of filling beer, the following problems may be encountered. Even when beer, the weight of which is y0, is filled into a relatively light empty beer barrel (the weight of which is lighter than the maximum value x2, for example, the weight is x0 or x1 in Fig. 8), the weight after-filling does not exceed the predetermined value z2. Therefore, this beer barrel is judged to be a barrel into which beer is not sufficiently filled. In the case where the beer barrel is judged to be a beer barrel into which beer is not sufficiently filled, it is necessary that the beer filled into the beer barrel be discharged as waste and filled once more. Therefore, not only the beer is wasted, but also the productivity of the beer deteriorates.

When the after-filling weight z2 is employed as the predetermined value for judging the insufficiency of filling beer, in order to prevent the occurrence of a problem in which it is judged to be insufficiency of filling beer, it is necessary that a weight of the beer filled into a relatively light empty beer barrel is intentionally increased to a value higher than y0, so that the after-filling weight is reached to the predetermined value z2. Concerning this matter, refer to y' and y" shown in Fig. 8. For the above reasons, in the prior art, a beer filling device is set so that a sufficiently heavy beer, which solves the problem of insufficiency of filling beer, is filled into the barrel. However, according to this method, a quantity of beer, which exceeds a necessary value, is filled into the barrel. Therefore, a remarkably large quantity of beer is wasted in the brewery, which affects productivity. Accordingly, it is desired that the filling weight of the beer is supported to the minimum weight of beer, by which the problem of insufficiency of filling beer can be solved.

US 4,676,282 describes a control system for filling containers with a predetermined weight of liquid. The system comprises a device for processing the value of the weight difference between the theoretical value of the weight of a filled container and the actual weight as measured on completion of filling. A feedback mechanism can then adjust the filling amount.

The present invention has been accomplished as a result of the circumstances described above. An object of the present invention is to provide a method of filling a barrel such as a beer barrel with beer without delivering a barrel, into which beer is not sufficiently filled, to the market and without deteriorating the productivity of beer even when there are variations in weight of the barrel. Another object of the present invention is to provide a filling device for executing the method.

### SUMMARY OF THE INVENTION

In order to accomplish the above object, according to the first aspect,

a filling device for filling a barrel with a liquid comprises: a before-filling barrel weight measurement means for measuring a weight of a before-filling barrel before a liquid is filled into the barrel; a deviation calculation means for calculating deviation by subtracting a predetermined before-filling barrel reference weight from the weight of the before-filling barrel which is measured by the before-filling barrel weight measurement means; and a liquid filling means for filling a liquid, the weight of which is predetermined, into the before-filling barrel, wherein when the deviation calculated by the deviation calculation means is negative, the liquid filling means charges a liquid of a weight in which an absolute value of the deviation is added to the predetermined filling weight.

In other words, in the first aspect, in the case where a weight of the empty barrel before filling is lighter than the empty barrel reference weight, consideration is given to the difference and an amount of liquid, which is larger than the predetermined filling weight, is filled. Therefore, in the case where it is judged whether the barrel has been in sufficiently filled with the liquid after filling, there is no possibility of being judged that the barrel is insufficiently filled according to the use of the light empty barrel.

According to the second aspect, a filling device according to the first aspect further comprising an after-filling barrel weight measurement means for measuring a weight of the after-filling barrel after the liquid was filled by the liquid filling means; and an ejection means for ejecting a barrel from the filling device in the case where the after-filling barrel weight, which is measured by the after-filling barrel weight measurement means, is lighter than a predetermined after-filling barrel reference weight.

In other words, in the second aspect, in the case where a barrel is not sufficiently filled with a liquid, the barrel can be prevented from being circulated in the market.

According to the third aspect, a method of filling a barrel with a liquid comprises the steps of: measuring a weight of the before-filling barrel before the liquid is filled into the barrel; calculating deviation by subtracting a predetermined before-filling barrel reference weight from the measured weight of the before-filling barrel; and filling the liquid of a weight in which the deviation is added to the predetermined filling weight in the case where the deviation is negative.

In other words, in the third aspect, in the case where a weight of the empty barrel before filling is lighter than the predetermined empty barrel reference weight, consideration is given to the difference and an amount of liquid, which is larger than the predetermined filling weight, is filled. Therefore, in the case where it is judged whether the barrel is in sufficiently filled with the liquid by the total weight of the barrel after filling the liquid, there is no possibility that it is judged that the barrel is insufficiently filled according to the use of the light empty barrel.

According to the fourth aspect, a method of filling a barrel with a liquid according to the third aspect further comprises the steps of: measuring a weight of the barrel after the liquid has been filled into the barrel; and ejecting the barrel from the filling device in the case where the measured weight of the barrel is lighter than the predetermined after-filling barrel reference weight.

In other word, in the fourth aspect, in the case where a weight of the barrel filled with a liquid is not sufficient, it is possible to prevent the barrel from being circulated in the market.

These and other objects, the characteristics and the advantages of the present invention will become more apparent in the detailed description of the typical embodiments of the present invention which follow.

### BRIEF DESCRIPTION OF THE DRAWINGS

Fig. 1 is a conceptual view showing a filling device for filling a beer barrel with beer according to the present invention.
Fig. 2 is a longitudinal sectional view of a filling section taken along a line I - I in Fig. 1.
Fig. 3 is a flow chart showing an operation program of a filling device of the first comparative embodiment of the present invention.
Fig. 4 is a view in which a relationship between the weight X of an empty beer barrel and the beer filling weight Y is expressed by a formula in the first comparative embodiment of the present invention.
Fig. 5 is a flow chart showing an operation program of a filling device of the first embodiment of the present invention.
Fig. 6 is a view in which a relationship between the weight X of an empty beer barrel and the beer filling weight Y is expressed by a formula in the first embodiment of the present invention.
Fig. 7a is a graph showing a relationship between the filling time and a signal of the flow velocity of beer.
Fig. 7b is another graph showing a relationship between the filling time and a signal of the flow velocity of beer.
Fig. 8 is a view in which a relationship between the weight x of an empty beer barrel and the beer filling weight y is expressed by a formula in the prior art.

### DETAILED DESCRIPTION OF THE PREFERRED EMBODIMENT

Referring to the accompanying drawings, an embodiment of the present invention will be explained below. Like reference characters are used to indicate like parts in the following drawings. In order to facilitate understanding, the scale has been appropriately changed.

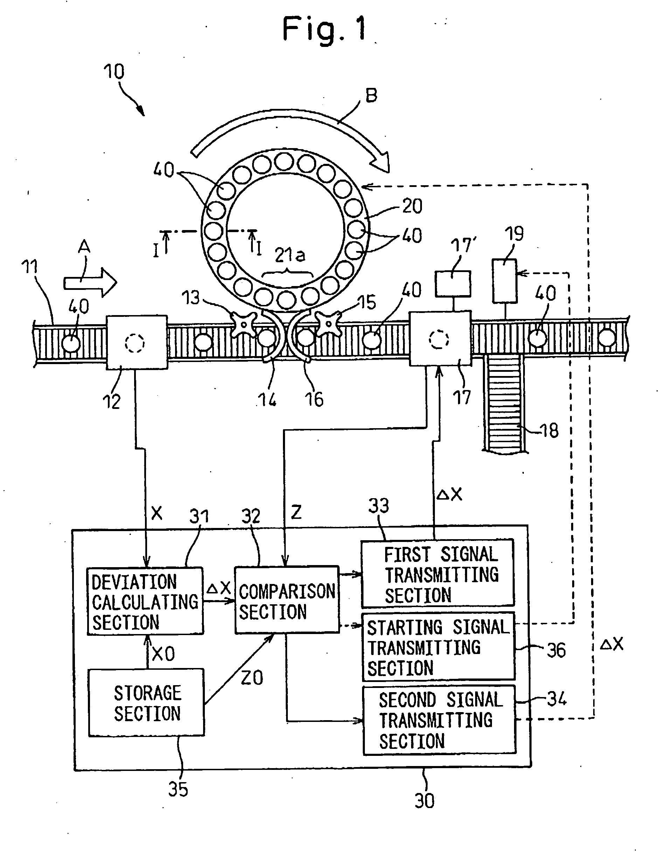

Fig. 1 is a conceptual view showing a filling device for filling a beer barrel with beer according to the present invention. A filling device 10 as shown in Fig. 1 includes: a conveyance passage 11 such as a conveyer for conveying a plurality of barrels, for example, a plurality of beer barrels 40 in the direction of arrow A; and an annular rotary passage 20, which is arranged adjacent to the conveyance passage 11, for successively conveying the beer barrels 40 in the direction of arrow B.

In the rotary passage 20, a plurality of filling sections 21, for example, twenty filling sections 21 for filling beer into the beer barrels 40 are arranged at regular intervals in the circumferential direction. In Fig. 1, the filling sections 21 are provided respectively at positions corresponding to the beer barrels 40 located in the rotary passage 20.

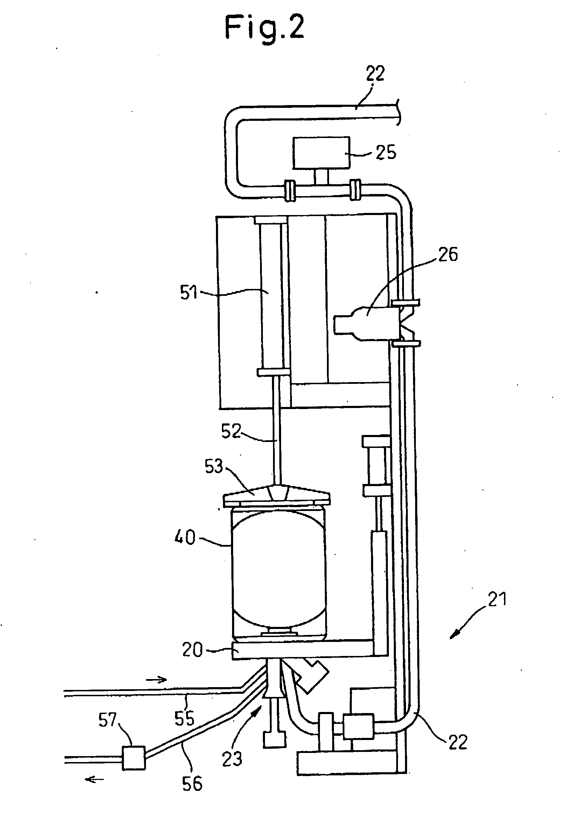

Fig. 2 is a longitudinal sectional view of a filling section taken along a line I - I in Fig. 1. In Fig. 2, the beer barrel 40 is arranged on the rotary passage 20 in which a method cap of the beer barrel 40 is directed downward. In an upper portion of the filling device 10, an air cylinder 51 having an extensible rod 52 is provided. At a forward end portion of the rod 52, a clamp handle 53, the configuration of which is a substantial "+", is attached. When the air cylinder 51 is operated to extend the rod 52, the beer barrel 40 is held between the clamp handle 53 and the rotary passage 20.

The filling section 21 includes: a filling head 23 capable of engaging a barrel aperture (not shown) of the beer barrel 40; and a liquid conveyance tube 22 extending from a beer storage tank (not shown) to the filling head 23. Beer in a beer storage tank (not shown) is filled from the barrel aperture into the beer barrel 40 through the liquid conveyance tube 22 and the filling head 23.

As shown in the drawing, in the liquid conveyance tube 22, a flow meter 25 for detecting a flow rate of beer flowing in the liquid conveyance tube 22 is arranged. Further, in the downstream of the flow meter 25 with respect to the flow of beer, a flow control valve 26 for controlling the flow rate of beer is arranged. The flow meter 25 and the flow control valve 26 are electrically connected to a control unit 30 described later.

Further, in Fig. 2, a supply tube 55 for supplying pre-stress gas into the beer barrel 40 before beer is filled into the beer barrel 40, and a discharge tube 56 for discharging the pre-stress gas from the beer barrel 40 are shown. The pre-stress gas is inert gas, for example, carbon dioxide or nitrogen. The pre-stress gas has a function of preventing carbon dioxide, which is dissolved in beer, from separating or foaming when filling beer into the beer barrel 40. In this connection, in the discharge tube 56, a control valve 57 for controlling a flow rate of discharging pre-stress gas is arranged. This control valve 57 is also electrically connected to the control unit 30. Although the details are not explained here, the pre-stress gas supplied to the beer barrel 40 is discharged through the discharge tube 56 in accordance with the progress of the filling operation of beer.

Referring to Fig. 1 again, the beer barrels 40, which has been conveyed onto the conveyance passage 11, are further conveyed into the rotary passage 20 by a star wheel 13 and a guide 14 arranged on the upstream side with respect to conveyance direction A. While the beer barrel 40, which has been conveyed into the rotary passage 20, is being rotated by the rotary passage 20 in the direction of arrow B, beer is filled into the beer barrel 40 by one filling section 21.

In other words, while the rotary passage 20 is being rotated from a beer barrel injecting position at the upstream side star wheel 13 to a beer barrel ejecting position at the downstream side star wheel 15, a predetermined amount of beer is filled into the beer barrel 40. The beer barrel 40 filled with beer is returned to the conveyance passage 11 by the star wheel 15 and the guide 16 on the downstream side. Since the filling device is composed as described above, in a filling section 21a located between the star wheels 13 and 15, no beer barrels 40 are arranged.

In the filling device 10 according to the present invention, a first weight measuring means 12 is arranged on the conveyance passage 11 in the upstream of the upstream side star wheel 13. This first weight measuring means 12 measures a weight of the empty beer barrel 40 before the beer barrel is filled with beer.

In the same manner, in the conveyance passage 11, a second weight measuring means 17 is arranged in the downstream of the downstream side star wheel 15. The second weight measuring means 17 measures a total weight of the beer barrel 40 after the beer barrel 40 has been filled with beer.

As shown in the drawing, in the downstream of the second weight measuring means 17, a branch conveyance passage 18 branches from the conveyance passage 11. Usually, the branch conveyance passage 18 is not operated. Only when a starting section 19 is set in motion, the branch conveyance passage 18 is operated. In the case where the total weight of the beer barrel 40, which has been measured by the second weight measuring means 17, is lighter than the predetermined value Z2, the starting section 19 is started and the beer barrel 40 concerned is ejected from the conveyance passage 11 into the branch conveyance passage 18. That is, the branch conveyance passage 18 has a function as an ejection means for ejecting the beer barrel 40.

The first and the second weight measuring means 12, 17 and the starting section 19 are also electrically connected to the control unit 30. In this case, the control unit 30 is a digital computer, which controls the entire operation of the filling device 10. As shown in Fig. 1, the control unit 30 includes a deviation calculation section 31; a comparison section 32; a first and a second signal transmitting section 33, 34; a starting signal transmitting section 36; and a storage section 35. These sections will be described later.

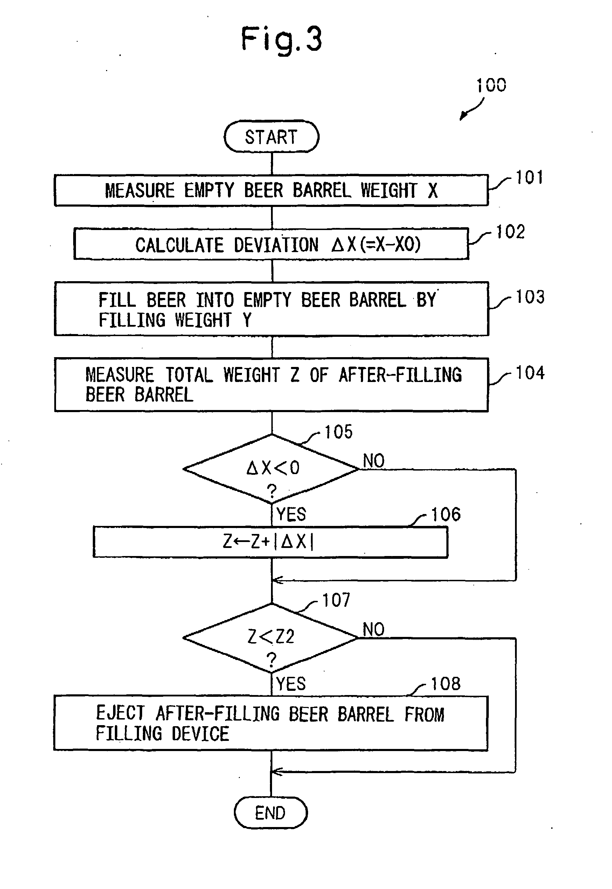

Fig. 3 is a flow chart showing an operation program of a filling device of a first comparative embodiment. An operation program 100 shown in Fig. 3 and an operation program 200 described later are previously stored in the storage section 35 of the control unit 30.

Referring to Fig. 3, an operation of the filling device according to the first embodiment of the present invention will be explained. In step 101 of the operation program 100, the weight of the empty beer barrel 40 conveyed in the conveyance passage 11 is measured by the first weight measuring means 12. The measured empty beer barrel weight X is sent to the deviation calculating section 31 of the control unit 30.

Next, in step 102, the deviation calculating section 31 subtracts an empty beer barrel reference weight X0, which is previously stored in the memory section 35, from the empty beer barrel weight X so as to calculate the deviation ΔX (= X - X0). In this case, the empty beer barrel reference weight X0 is an average value or a median of a plurality of beer barrels 40, the weights of which have variations. This average value or median has previously been decided by experiments etc..

Next, the beer barrel 40, the weight of which has been measured, is moved from the conveyance passage 11 to the rotary passage 20 by the upstream side star wheel 13 and the guide 14 and held by the corresponding filling section 21 as described before. While the empty beer barrel 40 is being rotated together with the rotary passage 20, beer, the amount of which is a predetermined filling weight Y, is filled into the beer barrel 40 (step 103).

After the beer barrel 40 has been filled with beer, the amount of which is a predetermined filling weight Y, the beer barrel 40 is moved to a position close to the downstream side star wheel 15. Then, the beer barrel 40 is returned from the rotary passage 20 to the conveyance passage 11 by the downstream side star wheel 15 and the guide 16. Next, at the second weight measuring means 17, a total weight Z at the empty beer barrel weight X of the beer barrel 40 itself and the filling weight Y of the beer is measured.

After that, in step 105, whether or not the deviation ΔX is lower than zero is judged by the comparison section 32 of the control unit 30. In the case where the deviation ΔX is not less than zero, that is, in the case where the empty beer barrel weight X is not less than the empty beer barrel reference weight X0, the program proceeds to step 107 without conducting a special processing. In this case, whether or not the after-filling beer barrel 40, is insufficiently filled is judged according to the total weight Z of the after-filling beer barrel 40 which is measured by the second weight measuring means 17.

On the other hand, in the case where the deviation ΔX is lower than zero in step 105, a signal relating to the absolute value of the deviation ΔX is transmitted to the second weight measuring means 17 by the signal transmitting section 33 shown in Fig. 1. As shown in Fig. 1, the second weight measuring means 17 includes a correction weight calculating means 17'. In this case, the correction weight calculating means 17' calculates a value, in which the absolute value of the deviation ΔX is added to the total weight Z, which is measured in step 104, so that the thus obtained value can be used as a new total weight (correction weight) of the after-filling beer barrel 40 (step 106).

The total weight Z to which the absolute value of the deviation ΔX is added in step 106 or the total weight Z measured in step 104 is transmitted to the comparison section 32 of the control unit 30. In step S107, whether or not the total weight Z is lighter than the after-filling beer barrel reference total weight Z2 is judged by the comparison section 32. In this case, the after-filling beer barrel reference total weight Z2 is a predetermined value previously stored in the storage section 35 of the control unit 30. This after-filling beer barrel reference total weight Z2 is a value in which the filling reference weight Y0 (delivery weight of beer) is added to the maximum value X2 of the empty beer barrel weight previously decided by a statistical method.

In the case where it is judged that the total weight Z is lighter than the after-filling beer barrel reference total weight Z2, it is determined that the after-filling beer barrel 40 is not sufficiently filled with beer. In this case, by transmitting a signal from the starting signal transmitting section 36 to the staring section 19, the branch conveyance passage 18 is started. Due to the foregoing, the after-filling beer barrel 40 is transferred from the conveyance passage 11 to the branch conveyance passage 18 and ejected outside from the filling device 10 (step 108).

On the other hand, in the case where it is judged that the total weight Z is not lighter than the after-filling beer barrel reference total weight Z2, it is determined that the after filling beer barrel 40 is sufficiently filled with beer. In this case, the starting signal transmitting section 36 is not acted and the after-filling beer barrel 40 is moved on the conveyance passage 11 as it is and conveyed to the next step.

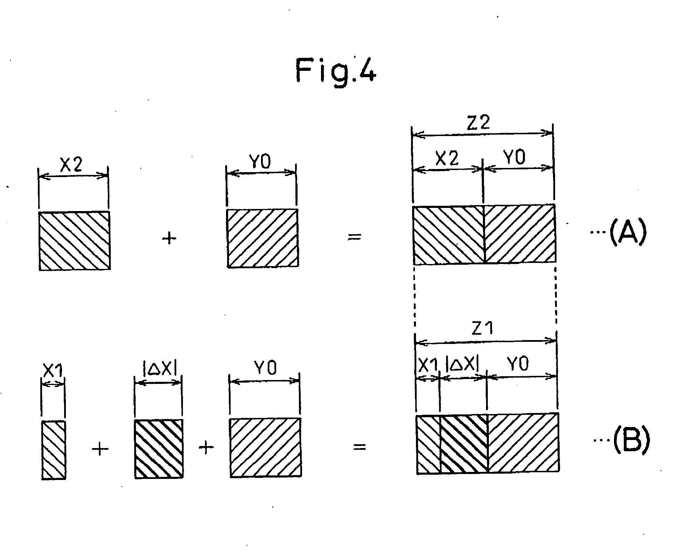

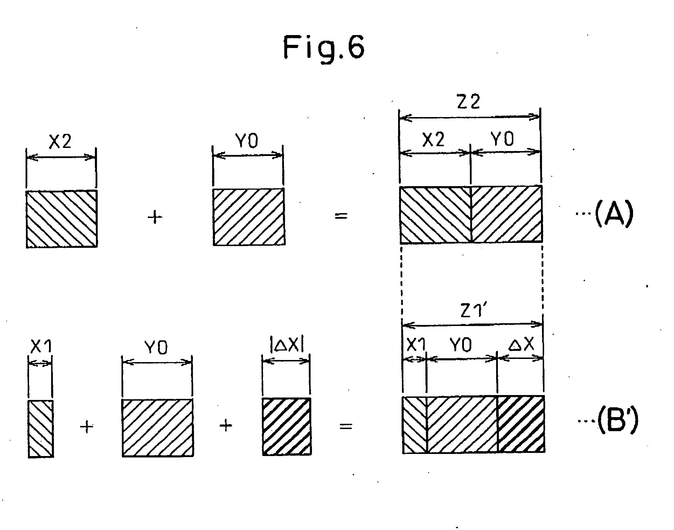

Referring to Fig. 4 in which a relationship between the empty beer barrel weight X and the filling weight Y of the beer is expressed by a formula, states of filling beer into various types of empty beer barrels in the first embodiment will be explained below. In Fig. 4 and Fig. 6 described later, the reference mark X0 designates the empty beer barrel reference weight. The reference marks X1 and X2 respectively designate the maximum and the minimum value of the empty beer barrel weight X (X1 < X0 < X2). In these drawings, beer, the weight of which is the filling reference weight Y0, is filled.

In Fig. 4, as shown by the formula (A), in the case where the empty beer barrel weight X is the maximum value X2, the deviation ΔX (= X2 - X0) is a positive value. Therefore, processing of step 106 shown in Fig. 3 is not conducted. Accordingly, the total weight Z of the beer barrel 40 after filling can be expressed by a sum (= total weight Z2) of the maximum value X2 of the empty beer barrel weight and the filling reference weight Y0. Accordingly, in this case, there is no possibility of being judged that the beer barrel is not sufficiently filled.

On the other hand, as shown by the formula (B), in the case where the empty beer barrel weight X is lighter than the maximum value X2, for example, in the case where the empty beer barrel weight X is the minimum value X1, in step 106 shown in Fig. 3, an absolute value of the deviation ΔX (= X1 - X0) is added to the total weight by the correction weight calculating means 17'. Accordingly, in this case, the total weight Z can be expressed as a sum (=total weight Z1) in which the minimum value X1 of the empty beer barrel weight, the filling reference weight Y0 and the absolute value of the deviation ΔX are added to each other.

As can be seen from Fig. 4, in the first embodiment of the present invention, since the weight of the empty beer barrel 40 is increased by the absolute value of the deviation Δx, the total weight Z1 is the same as the after-filling beer barrel reference total weight Z2. Therefore, in the first comparative embodiment of the present invention, even in the case where a light empty beer barrel 40, for example, an empty beer barrel 40, the weight of which is the minimum value X1, is used, since the total weight Z is increased as described above, there is no possibility that the beer barrel is insufficiently filled.

In the related art, when the light beer barrel 40 is used, it is necessary to increase the filling weight of beer until it exceeds the after-filling beer barrel reference total weight Z2. However, in the first comparative embodiment of the present invention, a value, in which the absolute value of the deviation ΔX is added to the total weight Z, is made to be a new total weight Z. Therefore, it is not necessary that a large amount of beer be filled into the beer barrel. Accordingly, it is possible to reduce a load given to a brewer on the basis of filling a redundant amount of beer into the beer barrel.

In this connection, there are variations in the filling weight of beer. Therefore, in some cases, the actual filling weight Y is heavier than the filling reference weight Y0. Further, in some cases, the actual filling weight Y is lighter than the filling reference weight Y0. In the case where the actual filling weight Y is lighter than the filling reference weight Y0, even in the first comparative embodiment, the total weight Z may be lighter than the after-filling beer barrel reference total weight Z2 in step 107 and the beer barrel 40 may be ejected from the filling device 10. Accordingly, there is no possibility that the barrel, which is not sufficiently filled, is circulated in the market. However, in the related art, in the case where the filling weight Y is heavier than the filling reference weight Y0, although it can not be said that the barrel is not sufficiently filled, in the case where the weight of a beer barrel 40 is lighter than the empty beer barrel reference weight X0 and where a difference between the empty beer barrel reference weight X0 and the empty beer barrel weight X is larger than a difference between the filling weight Y and the filling reference weight Y0, the beer barrel 40 is ejected from the filling device 10. However, in the first comparative embodiment, there is no possibility that such a beer barrel 40 is judged to be a beer barrel that is not sufficiently filled. Accordingly, the beer barrel 40 is not ejected from the filling device 10 but conveyed to the next step. Therefore, it is possible to enhance a ratio of the number of beer barrels 40 conveyed to the next step.

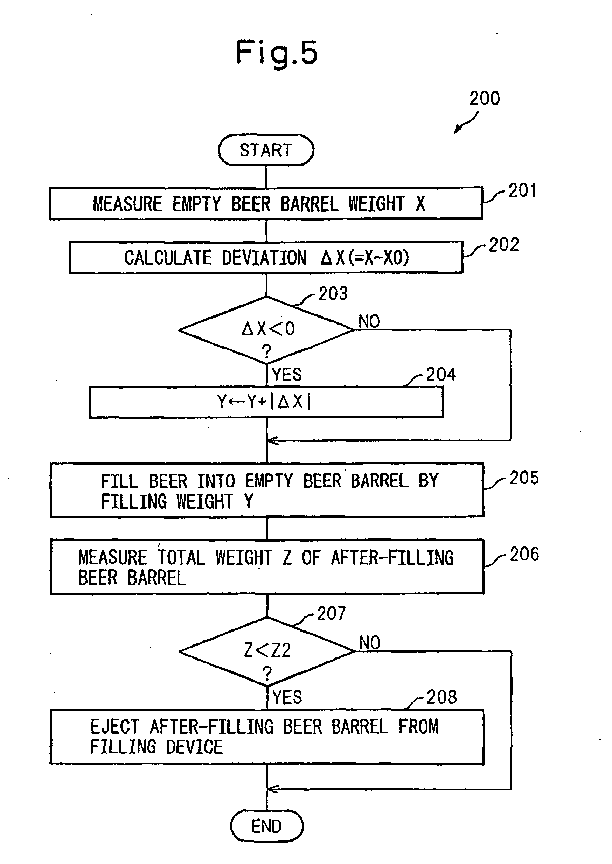

Fig. 5 is a flow chart showing an operation program of a filling device of the first embodiment of the present invention. Steps 201, 202 and 203 in the operation program 200 shown in Fig. 5 are respectively the same as steps 101, 102 and 103 in the operation program 100. Therefore, the explanations of the steps are omitted here.

In the case where it is judged that the deviation ΔX is lower than zero in the first embodiment, in step 204, the second signal transmitting section 34 transmits a signal corresponding to the absolute value of the deviation ΔX to the filling section 21 corresponding to the beer barrel 40 concerned. Due to the foregoing, a value in which the absolute value of the deviation ΔX is added to the predetermined filling weight Y is set as a new filling weight Y of beer to be filled into the beer barrel 40 concerned. In this connection, as can be seen from Fig. 5, in the case where it is judged that the deviation ΔX is not lower than zero, the predetermined beer filling weight Y is not changed.

Next, in step 205, beer, the weight of which is the predetermined filling weight Y or the new filling weight Y changed in step 204, is filled into the beer barrel 40 concerned by the filling section 21. In step 206, the total weight Z of the beer barrel 40 after filling is measured by the second weight measuring means 17. After that, in the same manner as that of steps 107 and 108 described before, in the case where the beer barrel 40 concerned is not sufficiently filled in steps 207 and 208 in Fig. 5, the beer barrel 40 is ejected from the filling device 10.

Referring to Fig. 6 which is similar to Fig. 4, states of filling beer into various empty beer barrels in the first embodiment will be explained below. The formula (A) shown in Fig. 6 is the same as that shown in Fig. 4. Therefore, the explanation of this formula is omitted here.

As shown by the formula (B') in Fig. 6, in the case where the empty beer barrel weight X is lighter than the maximum value X2, for example, in the case where the empty beer barrel weight X is the minimum value X1, the absolute value of the deviation ΔX is added to the filling reference weight Y0 in step 204 in Fig. 5. In other words, in this case, an amount of beer, which is the same as the amount in which the absolute value of the deviation ΔX is added to the filling reference weight Y0, is actually filled in the beer barrel. Accordingly, the total weight Z is expressed by the sum (the total weight Z1') of the minimum weight X1 of the empty beer barrel weight, the filling reference weight Y0 and the absolute value of the deviation ΔX. Note, that the beer filling weight, which is actually filled, is changed in the first embodiment as described above.

As can be seen from Fig. 6, in the first embodiment of the present invention, the beer filling weight Y is increased by an amount of beer corresponding to the absolute value of the deviation ΔX. Therefore, the total weight Z1' in this case, is the same as the after-filling beer barrel reference total weight Z2. Accordingly, in the first embodiment of the present invention, even when a light empty beer barrel 40 is used, for example, even when an empty beer barrel 40, the weight of which is the minimum value X1 is used, since the total weight Z is increased, there is no possibility of being judged that the beer bottle 40 is not sufficiently filled.

In the first embodiment, in the case where a relatively light beer barrel 40 is used, in order to increase the total weight Z of the beer barrel 40 after filling, an amount of beer, which is larger than the filling reference weight Y0, is filled into the beer barrel. Due to the foregoing, an unnecessary large amount of beer is filled into the beer barrel, which could be a burden to the brewer. However, in the case where it is judged after the completion of filling that the beer barrel is not sufficiently filled, the filled beer have to be once discharged as a waste and the beer barrel have to be recharged with new beer. Therefore, compared with such a case, the first embodiment is advantageous in that an amount of beer to be discharged as a waste is small.

In this connection, in the same manner as that described before, in the first embodiment, there are variations in the beer filling weight. Therefore, in the first embodiment, in the case where the filling weight Y is lighter than the filling reference weight Y0, the total weight Z is lighter than the after-filling beer barrel reference total weight Z2 in step 207 and the beer barrel 40 is ejected from the filling device 10. Accordingly, there is no possibility that the beer barrel, which is not sufficiently filled, is circulated in the market. However, in the related art, in the case where the filling weight Y is heavier than the filling reference weight Y0, although it can not be said that the barrel is not sufficiently filled, in the case where the weight X of a beer barrel 40 is lighter than the empty beer barrel reference weight X0 and where a difference between the empty beer barrel reference weight X0 and the empty beer barrel weight X is larger than a difference between the filling weight Y and the filling reference weight Y0, the beer barrel 40 is ejected from the filling device 10. However, in the first embodiment, there is no possibility that such a beer barrel 40 is judged to be a beer barrel that is not sufficiently filled. Accordingly, the beer barrel 40 is not ejected from the filling device 10 but conveyed to the next step. Therefore, it is possible to enhance a ratio of the number of beer barrels 40 conveyed to the next step.

In other words, in the first embodiment, on the basis of the absolute value of the deviation ΔX before filling beer, it is possible to estimate that there is a possibility that the beer barrel is judged to be insufficiently filled by the total weight Z. In the case where it is estimated that the beer barrel is not sufficiently filled, an amount of redundant beer, by which it is judged that the beer barrel is not in sufficiently filled, is charged together at the time of filling beer, in other words, an amount of redundant beer corresponding to the absolute value of the deviation ΔX is filled' together at the time of filling beer.

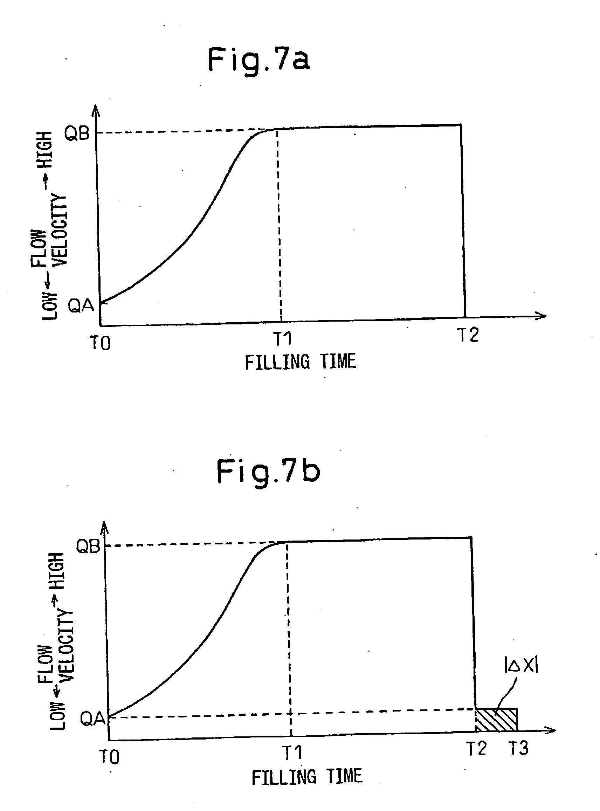

Referring to Figs. 7a and 7b showing a relationship between the filling time and a signal of the flow velocity of beer, a filling operation of filling redundant beer will be explained below. In these drawings, the axis of abscissas represents the filling time of beer and the axis of ordinates represents a signal of the flow velocity of beer. In this connection, the flow velocity of beer, which is shown in the drawings, is controlled by the flow control valve 26.

Fig. 7a shows a case in which the filling weight of beer is not changed since it is judged in step 203 in Fig. 6 that the deviation ΔX is not lower than zero. As shown in Fig. 7a, in this case, the flow velocity of beer is gradually increased from the flow velocity QA to the maximum flow velocity QB in the period of time from the time T0 to the time T1. The reason why the flow velocity of beer is gradually increased is to prevent carbon dioxide contained in beer from separating or foaming at the time of filling.

Next, when the flow velocity of beer is achieved to the maximum flow velocity QB, beer is continuously filled at the maximum flow velocity QB in the period of time from the time T1 to the time T2. After that, at the time T2, the flow control valve 26 is closed so that the supply of beer can be instantaneously shut off.

On the other hand, Fig. 7b shows a case in which the beer filling weight is increased since it is judged in step 203 in Fig. 6 that the deviation ΔX is lower than zero. In this case, from the time T0 to the time T2, the flow velocity of beer is controlled in the same manner as that of the case shown in Fig. 7a.

At the time T2, the flow velocity of beer is instantaneously reduced from the maximum flow velocity QB to the flow velocity QA. Next, in the period of time from the time T2 to the time T3, beer is filled at the flow velocity QA. In this case, the time T3 is a value calculated before filling beer according to the absolute value of the deviation ΔX. After that, at the time T3, the flow control valve 26 is closed so that the supply of beer can be shut off.

As described above, in the first embodiment, after the time T2 which is the filling finish time in the usual case, an amount of redundant beer is filled. Due to this, the beer filling weight can be added relatively easily and accurately. In the first embodiment, the behavior of the beer filling weight is not changed at the beginning of filling beer. Therefore, it is possible to prevent carbon dioxide contained in beer from separating or foaming at the time of filling beer. Of course, the time T2 may be shifted backward by a period of time corresponding to the absolute value of the deviation ΔX. In addition, it is clear that the flow velocity and the time may be changed so that the beer filling weight can be increased by the absolute value of the deviation ΔX.

The present invention is explained above referring to the typical embodiment. However, it should be noted that various other changes, omissions and additions can be made by those skilled in the art without departing from the scope of the present invention.

## Claims

1. A filling device for filling a barrel with a liquid comprising:
a before-filling barrel weight measurement means for measuring a weight of a before-filling barrel before a liquid is filled into the barrel;
a deviation calculation means for calculating deviation by subtracting a predetermined before-filling barrel reference weight from the weight of the before-filling barrel which is measured by the before-filling barrel weight measurement means; and
a liquid filling means for filling a liquid, the weight of which is predetermined, into the before-filling barrel, wherein
when the deviation calculated by the deviation calculation means is negative, the liquid filling means charges a liquid of a weight in which an absolute value of the deviation is added to the predetermined filling weight.

2. A filling device according to claim 1, further comprising an after-filling barrel weight measurement means for measuring a weight of the after-filling barrel after the liquid was filled by the liquid
filling means; and
an ejection means for ejecting a barrel from the filling device in the case where the after-filling barrel weight, which is measured by the after-filling barrel weight measurement means, is lighter than a predetermined after-filling barrel reference weight.

3. A method of filling a barrel with a liquid comprising the steps of:
measuring a weight of the before-filling barrel before is liquid filled into the barrel;
calculating deviation by subtracting a predetermined before-filling barrel reference weight from the measured weight of the before-filling barrel; and
filling the liquid of a weight in which the deviation is added to the predetermined filling weight in the case where the deviation is negative.

4. A method of filling a barrel with a liquid according to claim 3, further comprising the steps of:
measuring a weight of the barrel after the liquid has been filled into the barrel; and
ejecting the barrel from the filling device in the case where the measured weight of the barrel is lighter than the predetermined after-filling barrel reference weight.

## Patentansprüche

1. Befüllungsvorrichtung zum Befüllen eines Fasses mit einer Flüssigkeit, die umfasst:
ein Vorbefüllungs-Fassgewicht-Messmittel, um ein Gewicht des Fasses im Zustand vor dem Befüllen zu messen, bevor eine Flüssigkeit in das Fass gefüllt wird;
ein Abweichungsberechnungsmittel, um eine Abweichung durch Subtrahieren eines Vorbefüllungs-Referenzfassgewichts von dem Gewicht des Fasses im Zustand vor dem Befüllen, das durch das Vorbefüllungs-Fassgewicht-Messmittel gemessen wird, zu berechnen; und
ein Flüssigkeitsbefüllungsmittel, um eine Flüssigkeit, deren Gewicht vorgegeben ist, in das Fass im Zustand vor dem Befüllen zu füllen, wobei
dann, wenn die durch das Abweichungsberechnungsmittel berechnete Abweichung negativ ist, das Flüssigkeitsbefüllungsmittel eine Flüssigkeit mit einem Gewicht lädt, bei dem zu dem vorgegebenen Befüllungsgewicht ein Absolutwert der Abweichung hinzugefügt ist.

2. Befüllungsvorrichtung nach Anspruch 1, die ferner ein Nachbefüllungs-Fassgewicht-Messmittel umfasst, um ein Gewicht des Fasses im Zustand nach dem Befüllen zu messen, nachdem die Flüssigkeit durch das Flüssigkeitsbefüllungsmittel eingefüllt worden ist; und
ein Ausstoßmittel zum Ausstoßen eines Fasses aus der Befüllungsvorrichtung in dem Fall, in dem das Nachbefüllungs-Fassgewicht, das durch das Nachbefüllungs-Fassgewicht-Messmittel gemessen wird, geringer ist als ein vorgegebenes Nachbefüllungs-Referenzfassgewicht.

3. Verfahren zum Befüllen eines Fasses mit einer Flüssigkeit, das die folgenden Schritte umfasst:
Messen eines Gewichts des Fasses im Zustand vor dem Befüllen, bevor Flüssigkeit in das Fass gefüllt wird;
Berechnen einer Abweichung durch Subtrahieren eines vorgegebenen Vorbefüllungs-Referenzfassgewichts von dem gemessenen Gewicht des Fasses im Zustand vor dem Befüllen; und
Einfüllen der Flüssigkeit, zu deren vorgegebenem Befüllungsgewicht die Abweichung hinzugefügt worden ist, falls die Abweichung negativ ist.

4. Verfahren zum Befüllen eines Fasses mit einer Flüssigkeit nach Anspruch 3, das ferner die folgenden Schritte umfasst:
Messen eines Gewichts des Fasses, nachdem die Flüssigkeit in das Fass gefüllt worden ist; und
Ausstoßen des Fasses aus der Befüllungsvorrichtung in dem Fall, in dem das gemessene Gewicht des Fasses geringer ist als das vorgegebene Nachbefüllungs-Referenzfassgewicht.

## Revendications

1. Dispositif de remplissage pour remplir un baril avec un liquide comprenant:
un moyen de mesure du poids du baril avant le remplissage pour mesurer le poids d'un baril avant le remplissage, avant qu'un liquide ne soit introduit dans le baril;
un moyen de calcul d'écart pour calculer un écart en déduisant un poids de référence prédéterminé du baril avant le remplissage du poids du baril avant le remplissage qui est mesuré par le moyen de mesure du poids du baril avant le remplissage; et
un moyen d'introduction de liquide pour introduire un liquide dont le poids est prédéterminé, dans le baril avant le remplissage, où
lorsque l'écart calculé par le moyen de calcul d'écart est négatif, le moyen de remplissage de liquide charge un liquide d'un poids où une valeur absolue de l'écart est ajoutée au poids de remplissage prédéterminé.

2. Dispositif de remplissage selon la revendication 1, comprenant en outre un moyen de mesure du poids du baril après le remplissage pour mesurer le poids du baril après le remplissage, après que le liquide a été introduit par le moyen de remplissage de liquide; et
un moyen d'éjection pour éjecter un baril du dispositif de remplissage dans le cas où le poids du baril après le remplissage, qui est mesuré par le moyen de mesure du poids du baril après le remplissage, est plus léger qu'un poids de référence prédéterminé du baril après le remplissage.

3. Procédé de remplissage d'un baril avec un liquide comprenant les étapes de:
mesurer le poids du baril avant le remplissage, avant que le liquide ne soit introduit dans le baril;
calculer l'écart en déduisant un poids de référence prédéterminé du baril avant le remplissage du poids mesuré du baril avant le remplissage; et
introduire le liquide d'un poids où l'écart est ajouté au poids de remplissage prédéterminé dans le cas où l'écart est négatif.

4. Procédé de remplissage d'un baril avec un liquide selon la revendication 3, comprenant en outre les étapes de:
mesurer un poids du baril après que le liquide a été introduit dans le baril; et
éjecter le baril du dispositif de remplissage dans le cas où le poids mesuré du baril est plus léger que le poids de référence prédéterminé du baril après le remplissage.
